# EUROPÄISCHE PATENTANMELDUNG

(11) **EP 1 726 394 A1**
(43) Veröffentlichungstag der Anmeldung: **29.11.2006**
(21) Anmeldenummer: 06008999.2
(22) Anmeldetag: 29.04.2006
(51) Int. Cl.: B23F 23/12, B23F 19/05

(54) **Verfahren und Werkzeugmaschine mit Messeinrichtung für die Feinbearbeitung von Verzahnungen**

(30) Priorität: 23.05.2005 DE 102005024127
(71) Anmelder: EMAG Holding GmbH, 73084 Salach (DE)
(72) Erfinder: Kobialka, Claus, Dr., 87471 Durach (DE)

(57) **Zusammenfassung**

Die Erfindung betrifft ein Verfahren zum Feinbearbeiten eines gezahnten Werkstückes (8), insbesondere eines Zahnrads, mit einer Bearbeitungsmaschine mit einer Werkstückspindel (6) und einem Honwerkzeug (9), wobei das Werkstück (8) und das Honwerkzeug (9) in kämmenden Eingriff gebracht werden, wobei während der Bearbeitung mittels eines Messfühlers (14) mindestens eine physikalische Größe an mindestens einem Zahn (23) des Werkstücks (8) gemessen wird und die Bearbeitung wiederholt wird, bis die Messwerte innerhalb vorgegebener Maßtoleranzen liegen.

## Beschreibung

Die Erfindung betrifft ein Verfahren und eine Werkzeugmaschine zur Feinbearbeitung von gezahnten Werkstücken, insbesondere von Zahnrädern.

Aus der DE 43 17 306 A1 ist ein Verfahren zur Feinbearbeitung von Verzahnungen bekannt, wobei vor der eigentlichen Bearbeitung zunächst eine Messung der vorhandenen Verzahnungsfehler des Zahnrades in der Maschine stattfindet und die ermittelten Fehler beim sich anschließenden Fertigungsprozess berücksichtigt werden, indem bei der elektronischen Drehkopplung von Werkstück- und Werkzeugwelle die Fehlerwerte "gegengehalten" werden.

Der Erfindung liegt die Aufgabe zugrunde ein Verfahren anzugeben, mit dem verzahnte Werkstücke wirtschaftlicher gehont werden können. Es ist auch die Aufgabe der Erfindung eine Vorrichtung zur Durchführung des Verfahrens anzugeben.

Diese Aufgabe wird durch das im Anspruch 1 gekennzeichnete Verfahren und die im Anspruch 7 gekennzeichnete Vorrichtung gelöst. Zweckmäßige Ausgestaltungen des Verfahrens und der Vorrichtung sind in den Unteransprüchen angegeben.

Der Kerngedanke des erfindungsgemäßen Verfahrens besteht darin, den Honvorgang durch Messungen am Werkstück fortlaufend zu überwachen und zu optimieren. Auf diese Weise kann die optimale Bearbeitungszeit ermittelt und dem fortschreitenden Werkzeugverschleiß entsprechend angepasst werden.

Bei der erfindungsgemäßen Werkzeugmaschine besteht der Grundgedanke darin, dass die Zustellachse zwischen Werkstück und Werkzeug gleichzeitig dazu dient, das Werkstück zum Messfühler zu bewegen. Dadurch kann der Messfühler ortsfest am Maschinengestell angeordnet werden. Besonders vorteilhaft kann der Messfühler stehend eingebaut werden, weil der Messkopf dabei ohne Einfluss der Schwerkraft betätigt wird. Bei einer vorteilhaften Ausführung ist ein Messfühler mit drei sternförmig angeordneten Messköpfen vorgesehen. Damit können auch Schrägverzahnungen stehend ohne Schwerkrafteinfluss vermessen werden.

Weitere Merkmale und Vorteile der Erfindung sind Gegenstand der nachfolgenden Beschreibung sowie der zeichnerischen Darstellung einiger Ausführungsbeispiele.
In der Zeichnung zeigen:
Fig. 1 eine Honmaschine mit Messfühler

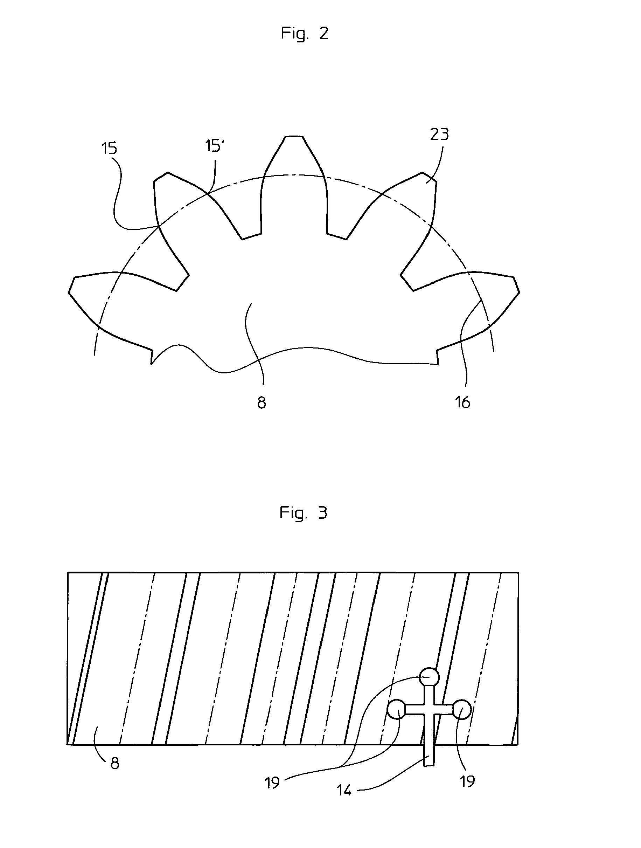

Fig. 2 einen Ausschnitt aus der Verzahnung
Fig. 3 eine Schrägverzahnung mit Messkopf

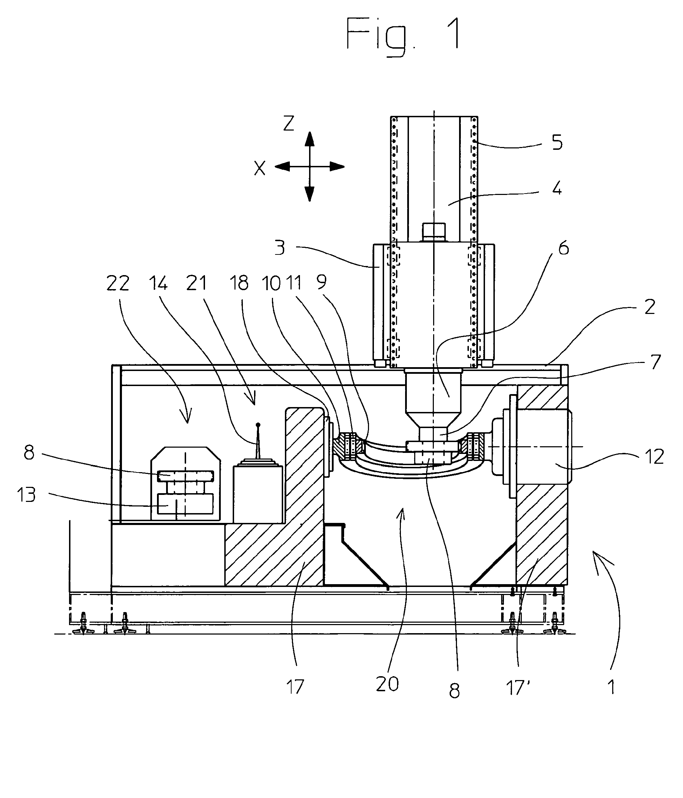

In Fig. 1 ist eine Honmaschine dargestellt. Das Maschinengestell 1 weist zwei tragende Wände auf, die durch Verbindungsstege 17, 17' verbunden sind. An der Oberseite des Maschinengestells1 sind zwei voneinander beabstandete Führungen 2, auf welchen der Horizontalschlitten 3 in Richtung der X-Achse hin und her beweglich geführt ist. Am Horizontalschlitten 3 ist der Vertikalschlitten 4 auf Führungen 5 in Richtung der Z-Achse verfahrbar. Der Vertikalschlitten 4 nimmt die Werkstückspindel 6 auf. Diese trägt an ihrem unteren Ende das Spannmittel 7 für Werkstücke 8. Das Honwerkzeug 9 ist als Innenzahnrad ausgeführt und im Halter 10 um seine Rotationsachse drehbar gehaltert. Der Antrieb für die Drehbewegung erfolgt über einen Torquemotor 11. Der Halter 10 ist im Maschinengestell 1 drehbar gelagert und kann um eine horizontal, parallel zur X-Achse, verlaufende Achse geschwenkt werden. Als Antrieb für die Schwenkbewegung dient der Motor 12. Im linken Teil der Maschine ist eine Fördereinrichtung 13 für die Werkstücke 8 vorgesehen. Die Werkstückspindel 6 ist entlang der Führungen 2 in eine Position oberhalb der Fördereinrichtung 13 verfahrbar. Sie kann die dort liegenden Werkstücke 8 direkt mit dem Spannmittel 7 aufnehmen, der Bearbeitung mit dem Honwerkzeug 9 zuführen, zur Messposition 21 transportieren und anschließend wieder auf die Fördereinrichtung 13 ablegen. Unmittelbar neben dem Honwerkzeug 9 ist der Messfühler 14 angeordnet. Dieser ist stehend auf dem Verbindungssteg 17 des Maschinengestells 1 angeordnet. Die zum Vermessen des Werkstücks 8 erforderlichen Positionierbewegungen relativ zu den Messköpfen 19, z.B. das Anfahren der Messpunkte 15, 15', werden von der Werkstückspindel 6 ausgeführt.

### Bezugszeichenliste

- 1: Maschinengestell
- 2: Führungen
- 3: Horizontalschlitten
- 4: Vertikalschlitten
- 5: Führungen
- 6: Werkstückspindel
- 7: Spannmittel
- 8: Werkstück
- 9: Honwerkzeug
- 10: Halter
- 11: Torquemotor
- 12: Motor
- 13: Fördereinrichtung
- 14: Messfühler
- 15: 15' Messpunkt
- 16: Teilkreisdurchmesser
- 17: 17' Verbindungssteg
- 18: Schwenklager
- 19: Messkopf
- 20: Bearbeitungsposition
- 21: Messposition
- 22: Aufnahme- Ablageposition
- 23: Zahn

## Patentansprüche

1. Verfahren zum Feinbearbeiten eines gezahnten Werkstückes (8), insbesondere eines Zahnrads, mit einer Bearbeitungsmaschine mit einer Werkstückspindel (6) und einem Honwerkzeug (9), wobei das Werkstück (8) und das Honwerkzeug (9) in kämmenden Eingriff gebracht werden, wobei während der Bearbeitung mittels eines Messfühlers (14) mindestens eine physikalische Größe an mindestens einem Zahn (23) des Werkstücks (8) gemessen wird,
**dadurch gekennzeichnet, dass**
a) die ermittelten Messwerte mit Sollwerten verglichen werden,
b) dass die Bearbeitung fortgesetzt wird, wenn die Messwerte außerhalb vorgegebener Maßtoleranzen liegen und dass
c) die Schritte a) und b) wiederholt werden, bis die Messwerte innerhalb vorgegebener Maßtoleranzen liegen.

2. Verfahren nach Anspruch 1, **dadurch gekennzeichnet, dass** die Schritte a) und b) in einer Werkstückspannung erfolgen.

3. Verfahren nach Anspruch 1 oder 2, **dadurch gekennzeichnet, dass** die Werkstückspindel (6) in mindestens einer Achsrichtung (X) längs des Maschinengestells (1) zwischen einer Bearbeitungsposition (20) und einer Messposition (21) hin und her bewegt wird.

4. Verfahren nach Anspruch 3, **dadurch gekennzeichnet**, die Werkstückspindel (6) in eine Position (22) zum Aufnehmen und Ablegen von Werkstücken (8), bewegt wird und dass sie die Werkstücke (8) mit dem Spannmittel (7) aufnimmt und nach erfolgter Bearbeitung dort wieder ablegt.

5. Verfahren nach einem der Ansprüche 1 bis 4, **dadurch gekennzeichnet, dass** die Zahndicke an mindestens einem Zahn (23) des Werkstücks (8) gemessen wird.

6. Verfahren nach Anspruch 5, **dadurch gekennzeichnet, dass** die Zahndicke durch Anfahren der Messpunkte (15, 15') auf dem Teilkreisdurchmesser (16) gemessen wird.

7. Werkzeugmaschine zur Feinbearbeitung von gezahnten Werkstücken (8), insbesondere zur Durchführung des Verfahrens nach einem der Ansprüche 1 bis 6, mit einem Maschinengestell (1), mit einer rotatorisch antreibbaren Werkstückspindel (6), die zum Greifen, Spannen, Antreiben und Ablegen von Werkstücken (8) dient, mit vertikaler Spindelachse, mit einem Honwerkzeug (9), das am Maschinengestell (1) um eine Achse parallel zu einer Bewegungsrichtung der Werkstückspindel (6) schwenkbar ist, wobei das Werkstück durch die Werkstückspindel (6) mit dem Honwerkzeug in kämmenden Eingriff bringbar ist, und mit einem Messfühler (14),
**dadurch gekennzeichnet, dass** die Werkstückspindel (6) in mindestens einer Achsrichtung (X) längs des Maschinengestells (1) zwischen einer Position zum Aufnehmen und Ablegen von Werkstücken (22), einer Bearbeitungsposition (20) und einer Messposition (21) hin und her bewegbar ist.

8. Werkzeugmaschine nach Anspruch 7, **dadurch gekennzeichnet, dass** der Messfühler (14) ortsfest am Maschinengestell (1) angeordnet ist.

9. Werkzeugmaschine nach Anspruch 8, **dadurch gekennzeichnet, dass** der Messfühler (14) stehend angeordnet ist.

10. Werkzeugmaschine nach Anspruch 9, **dadurch gekennzeichnet, dass** der Messfühler (14) drei sternförmig angeordnete Messköpfe (19) aufweist.
